# EUROPÄISCHE PATENTSCHRIFT

(11) **EP 1 030 755 B1**
(45) Veröffentlichungstag und Bekanntmachung des Hinweises auf die Patenterteilung: **22.05.2002**
(21) Anmeldenummer: 98963444.9
(22) Anmeldetag: 11.11.1998
(51) Int. Cl.: B23B 5/18, B23C 3/06, B23P 13/00

(54) **KURBELWELLE SPANEN + HÄRTEN + SPANEN + FINISHEN**
CRANKSHAFT MACHINING + HARDENING + MACHINING + FINISHING
COUPE + TREMPE + COUPE + FINISSAGE DE VILEBREQUINS

(30) Priorität: 11.11.1997 DE 19749940
(43) Veröffentlichungstag der Anmeldung: 30.08.2000
(73) Patentinhaber: BOEHRINGER WERKZEUGMASCHINEN GmbH, D-73033 Göppingen (DE)
(72) Erfinder: SANTORIUS, Rolf, D-73066 Uhingen-Nassachmühle (DE); KOHLHASE, Matthias, D-78713 Schramberg-Sulgen (DE)
(74) Vertreter: Alber, Norbert, Dipl.-Ing.
(86) Internationale Anmeldenummer: EP9807233
(87) Internationale Veröffentlichungsnummer: WO9924197

(56) Entgegenhaltungen:
- WO-A-96/39269
- DE-A- 4 446 475
- US-A- 3 832 919
- US-A- 5 025 689

## Beschreibung

### I. Anwendungsgebiet

Die Erfindung betrifft ein Verfahren gemäß dem Oberbegriff des Patentanspruchs 1 und wie z.B. aus WO 96/39629 bekannt. Ein solches Verfahren wird zum Bearbeiten von rotationssymmetrischen Teilen bis zu deren verwendungsfähigen Zustand eingesetzt, wobei die Teile im Laufe ihres Herstellungsprozesses wenigstens teilweise einem Härtungsprozeß unterworfen werden. Insbesondere betrifft dies Kurbelwellen, insbesondere die Lagerflächen (sowohl der Hublager als auch der Paßlager, der Dichtlager und Mittellager) von Kurbelwellen, bei denen der verwendungsfähige Zustand derjenige Zustand ist, in dem ohne weitere Materialabnahme an den Lagerflächen die Kurbelwelle im Motor eingebaut werden kann. Dabei sind unter Lagerflächen sowohl die Mantelflächen, also der Lagerdurchmesser, zu verstehen, als auch die sogenannten Spiegelflächen, also die an die Mantelflächen, in der Regel senkrecht, angrenzenden Stimflächen, die beispielsweise der axialen Lagerung dienen. Dabei werden vor allem bei Stahlkurbelwellen die Lagerflächen in deren oberflächennahen Bereichen gehärtet. Dies dient sowohl einer erhöhten Abriebfestigkeit der Lagerstellen, als auch einer Vorbeugung von Beschädigungen dieser Lagerflächen beim Handling während des gesamten Herstellungsprozesses als auch der Beeinflussung der Festigkeitseigenschaften.

### II. Technischer Hintergrund

Kurbelwellen, insbesondere die Kurbelwellen für Pkw-Motoren mit hohen Zylinderzahlen, sind als während der Bearbeitung instabile und damit schwer bearbeitbare Werkstücke bekannt. Die Beurteilung der Maßhaltigkeit einer fertigen Kurbelwelle erfolgt primär - neben der axialen Lagerbreite - durch Beurteilung folgender Parameter:
- Durchmesserabweichung = Abweichung vom vorgegebenen Solldurchmesser des Lagerzapfens,
- Rundheit = makroskopische Abweichung von der kreisrunden Sollkontur des Lagerzapfens,
- Rundlauf = Durchmesserabweichung bei sich drehendem Werkstück, also z. B. die Abweichung von der Soll-Lagekontur, die eine Mittellagerstelle während der Drehung der Kurbelwelle vollzieht aufgrund einerseits der nicht idealen Rundheit dieses Mittellagerzapfens und andererseits der Durchbiegung der Kurbelwelle, die dabei nur an ihren Enden gespannt ist,
- Rauheit Rₐ = die mikroskopische Rauheit der Oberfläche der Lagerstelle, repräsentierender, rechnerisch ermittelter Wert,
- Traganteil = der tragende Flächenanteil der mikroskopisch betrachteten Oberflächenstruktur, der zu einer aufgedrückten Gegenfläche in Kontakt gerät,
und zusätzlich bei den Hublagerstellen:
- Hubabweichung = maßliche, prozentuale Abweichung des Isthubes (Abstand der Istmitte des Hublagerzapfens von der Istmitte der Mittellager), vom Sollhub und
- Winkelabweichung = in Grad oder als auf den Hub bezogenes Längenmaß in Umfangsrichtung angegebene Abweichung der Ist-Winkellage des Hublagerzapfens von seiner Soll-Winkellage relativ zur Mittellagerachse und bezüglich der Winkelstellung zu den übrigen Hublagerzapfen,
wobei die Einhaltung der gewünschten Toleranzen bei diesen Parametern weniger durch die zur Verfügung stehenden Bearbeitungsverfahren als auch die Instabilität des Werkstückes und die Bearbeitungskräfte erschwert wird. Auch die Effizienz und Wirtschaftlichkeit des Verfahrens spielt in der Praxis eine große Rolle.

Bisher wurde der Materialabtrag von den Lagerstellen der urgeformten, also gegossenen oder geschmiedeten Kurbelwelle, in vier Bearbeitungsschritten nacheinander durchgeführt:

### 1. Schritt:

Spanende Bearbeitung mit bestimmter Schneide; dabei wurden die Verfahren Drehen, Drehräumen, Dreh-Drehräumen, Innenrundfräsen und Außenfräsen, Drehfräsen, insbesondere als Hochgeschwindigkeitsfräsen, bzw. Kombinationen dieser Verfahren eingesetzt. Das abzutragende Materialaufmaß bewegte sich im mm-Bereich.

### 2. Schritt:

Härten der gewünschten Bereiche, insbesondere der Lagerflächen, wodurch die Erwärmung und spätere Abkühlung der Kurbelwelle, und durch die Änderung der Material- und Gefügestruktur insbesondere durch den ungleichmäßigen Verlauf dieser Vorgänge, ein Verzug und Maßänderung der Kurbelwelle bzw. eines Ihrer Bereiche eintritt, der durch die nachfolgenden Materialabnahmen im Hinblick auf die Soll-Maße des Endzustandes kompensiert werden muß.

### 3. Schritt:

Schleifen mittels eines harten, massiven Schleifwerkzeuges, beispielsweise einer Schleifscheibe, welche meist mit ihrer Rotationsachse parallel zur Rotationsachse der zu bearbeitenden Kurbelwelle rotiert; das abzutragende Materialaufmaß bewegte sich im Zehntel-mm-Bereich.

Bei schwierig zu bearbeitenden, insbesondere langen und damit sehr instabilen Kurbelwellen, erfolgte die Schleifbearbeitung auch mehrstufig, z.B. zweistufig durch Vor- und Fertigschleifen.

### 4. Schritt:

Finishen durch in der Regel ein stillstehendes Schleifmittel (Schleifband oder Schleifstein), welches an den Außenumfang der rotierenden Lagerstelle angedrückt wird; das abgetragene Materialaufmaß bewegt sich z.Z. im Hundertstel-mm- oder gar µm-Bereich.

Dabei ist die Bearbeitung noch nach dem Material der Kurbelwelle (Stahl oder Guß) zu unterscheiden, wobei insbesondere Stahlkurbelwellen, die bevorzugt für hochbelastete Einsatzfälle verwendet werden, nach der spanenden Bearbeitung gehärtet werden.

Um die Kosten bei der Kurbelwellenbearbeitung zu senken, wird angestrebt, die Bearbeitung der Lagerstellen von vier auf drei unterschiedliche Bearbeitungsstufen zu reduzieren.

Dies bedeutet bei einem Weglassen der spanenden Bearbeitung jedoch, daß insbesondere der durch das Schleifen zu bewältigende Materialabtrag größer als beim vierstufigen Verfahren sein muß. Beim Materialabtrag mittels Schleifen ist jedoch nachteilig, daß
- wegen des zuzugebenden Kühl-Schmiermitteis der anfallende Schleifschlamm problematisch und extrem teuer in der Entsorgung ist,
- wegen des im Kühlschmiermittel enthaltenen Öles, z. B. beim CBN-Schleifen, immer eine latente Verpuffungsgefahr besteht,
- beim Schleifen die Menge des verwendeten Kühl-Schmiermittels wesentlich größer ist als bei spanenden Bearbeitungsverfahren, da das Kühl-Schmiermittel zusätzlich benutzt wird, um durch Aufstrahlen unter hohem Druck den Schleifstaub wieder aus der Oberfläche der Schleifscheibe zu entfernen,
- dennoch die Gefahr einer Überhitzung des Werkstückes sehr groß ist,
- auch die auf das Werkstück einwirkenden Bearbeitungsdrücke höher sind als beim spanenden Bearbeiten, und
- eine mikroskopische Oberflächenstruktur erzeugt wird, bei der die durch das Schleifkorn aufgerissenen Komgrenzen durch die nachfolgenden Schleifkörner mit abgetragenem Werkstückmaterial wieder zugeschmiert werden, also eine Oberflächenstruktur mit relativ wenigen schroffen Spitzen, sondem mit zum Teil schuppenartig überlappenden, mehr oder weniger ebenen, abgebogenen Spitzen entsteht.

### III. Darstellung der Erfindung

### a) Technische Aufgabe

Es ist daher die Aufgabe gemäß der Erfindung, den Materialabtrag bei der Bearbeitung von Lagerstellen einer zu härtenden Kurbelwelle zu vereinfachen.

### b) Lösung der Aufgabe

Diese Aufgabe wird durch die kennzeichnenden Merkmale des Anspruches 1 gelöst. Vorteilhafte Ausführungsformen ergeben sich aus den Unteransprüchen.

Durch das Weglassen der Schleifbearbeitung wird die Bearbeitungsfolge von vier auf nur drei prinzipiell unterschiedliche Bearbeitungsverfahren reduziert. Damit fallen nicht nur sämtliche Entsorgungsprobleme des Schleifschlammes weg, sondern die ganz erheblichen Investitionskosten für Schleifmaschinen, die Kosten für den Werkzeugverbrauch und nicht zuletzt der durch das Schleifen erhöhte Bestand an Werkstücken durch verlängerte Umlaufzeiten der Werkstücke. Die Entsorgung der Späne der spanenden Bearbeitung ist unproblematisch, da entweder (Hochgeschwindigkeitsfräsen) trocken geschnitten wird, oder die Trennung Späne-Öl wegen der viel geringeren spezifischen Oberfläche der Späne gegenüber Schleifstaub vollständig möglich ist.

Um beim Materialabtrag das Finishen direkt an die spanende Bearbeitung mit bestimmter Schneide, im folgenden kurz spanende Bearbeitung genannt, anschließen lassen zu können, muß der Grad der zulässigen Abweichung der Istwerte von den Sollwerten, wie sie nach der spanenden Bearbeitung vorliegen, so festgelegt werden, daß in der Summe der Bearbeitungsverfahren (spanende Bearbeitung + Finishen) ein technisch möglichst niedriger Aufwand getrieben werden muß, bei gleichzeitig möglichst kurzer Gesamt-Bearbeitungszeit.

Unter Umständen ist es auch möglich, mit einem so guten Endergebnis spanend zu bearbeiten, daß auf das Finishen vollständig verzichtet werden kann. Insgesamt betrifft die vorliegende Erfindung damit folgende Kombinationen von Bearbeitungsfolgen bis zum verwendungsfähigen Zustand z. B. der Kurbelwelle:
Spanen - Härten - Spanen - Finishen
Spanen - Härten - Spanen
Spanen - Härten - Finishen
Spanen - Härten

Dabei genügt es nicht, mit der spanenden Bearbeitung Sollmaße anzustreben, die so nahe als möglich an die Endmaße nach dem Finishen heranreichen, damit die durch Finishen und damit durch relativ langsamen Materialabtrag, zu bewältigende Aufmaße so gering wie möglich bleiben können.

Es muß berücksichtigt werden, daß die Hubabweichung und die Winkelabweichung der Hublagerzapfen sich durch das Finishen nicht mehr oder nur sehr gering kompensieren lassen.

Ferner muß berücksichtigt werden, daß beim Finishen ohnehin erstens die erzielbaren Materialabnahmen (Durchmesserverringerung) sehr gering sind, also bis etwa 200 µm mit wirtschaftlich vertretbarem Aufwand erreichen können und darüber zweitens durch das Finishen primär der Traganteil - und zwar durch Verringern der Rauheit - erhöht wird, mit dem Ziel, einen Traganteil von etwa 95% zu erreichen. Ein Traganteil von 100% ist unerwünscht, da dann keine Vertiefungen mehr vorhanden wären, die zur Aufrechterhaltung eines Schmierfilms in der Lagerstelle notwendig sind.

Hinsichtlich der mikroskopischen Oberflächenstruktur wird durch die spanende Bearbeitung eine Oberfläche erzielt, bei der die Korngrenzen teilweise aufgerissen sind, indem die Schneide beim Durchtrennen des Materials die Körner auseinanderzieht. Dadurch weist die Oberfläche eine relativ große Zahl spitzer Erhebungen, unterbrochen von Tälern in Form von geöffneten Korngrenzen, auf. Eine derartige Oberflächenstruktur kommt dem Finishen dadurch entgegen, daß die vielen spitzen Erhebungen nicht nur den Materialabtrag durch Finishen erleichtern, sondern gleichzeitig auch das Zusetzen des beim Finishen verwendeten Finish-Bandes etc. verlangsamen, indem die spitzen Erhebungen der Werkstückoberfläche das im Finishband bereits abgelagerte Material teilweise wieder aus diesem herausreißen.

Bereits beim Verringern der Rundheitsabweichungen durch Finishen zeigen sich die Grenzen dieses Verfahrens darin, daß der Zeitaufwand bzw. die bewältigbaren Rundheitsabweichungen nicht nur vom Absolutwert der zu egalisierenden Rundheitsabweichung abhängen, sondern auch von deren Gestalt:

Besteht die Unrundheit darin, daß über den Umfang verteilt nur einige wenige (z.B. 2-3) Wellentäler bzw. Erhebungen vorhanden sind (langwellige Unrundheit), so wird bei gleichem Absolutwert der Unrundheit für die Egalisierung mittels Finishen ein wesentlich höherer Zeitaufwand benötigt bzw. es kann u. U. keine vollständige Egalisierung erreicht werden, gegenüber einer kurzwelligen Unrundheit von etwa 5, vorzugsweise sogar etwa 30 oder mehr Wellentälem pro Umfang der Lagerstelle bei gleichem Absolutwert der Unrundheit.

Ferner ist zu berücksichtigen, daß beim Finishen gleichzeitig einerseits die Rauheit verringert und damit der Traganteil verbessert wird, und andererseits die vorhandene Unrundheit egalisiert wird. Diese beiden Effekte lassen sich kaum oder nur sehr begrenzt voneinander abkoppeln. Wenn also ausgehend von einer Anfangs-Rauheit beim Finishen nach einer bestimmten Zeit die gewünschte Rauheit erreicht ist, wird das Finishen abgebrochen, da ein bestimmter Traganteil nicht überschritten werden soll. Die in diesem Zustand erreichte Egalisierung der Rundheitsabweichung wird dann als Endergebnis akzeptiert, und kann nicht mehr separat weiterbetrieben werden.

Rauheit und Traganteil können somit - wenn von einem bestimmten Ausgangszustand dieser beiden Parameter aus das Finishen begonnen wird - nicht unabhängig voneinander auf gewünschte Endwerte hin bearbeitet werden.

Für das direkte Nachfolgen des Finishens nach der spanenden Bearbeitung empfiehlt sich also insbesondere eine spezifische Kopplung der Eingangsparameter beim Finishen und damit der Ausgangsparameter bei der spanenden Bearbeitung hinsichtlich einerseits des Absolutwertes und Grad der Rundheitsabweichung und andererseits hinsichtlich der mikroskopischen Rauheit und des dabei vorhandenen Traganteiles.

Bei der spanenden Bearbeitung mittels Drehverfahren und auch Drehräumverfahren, und ggf. auch bei langsamen Fräsverfahren treten aufgrund langwelliger Schwingungen im Maschinenaufbau, den Werkzeugen und den Werkstücken bei der spanenden Bearbeitung auch eher langwellige Rundheitsabweichungen auf. Dagegen erzeugt speziell das Hochgeschwindigkeits-Außenfräsen kurzwellige Rundheitsabweichungen. Durch Verwendung des Hochgeschwindigkeits-Außenfräsens, bei dem ein im Vergleich zur Kurbelwelle im Durchmesser sehr großer Außenrundfräser von etwa 700 cm Durchmesser mit einer Schnittgeschwindigkeit von 150 bis 1000 m/min neben dem relativ langsam drehenden Werkstück um eine parallel zur Kurbelwelle liegende Achse rotiert, können also Rundheitsabweichungen mit vielen Erhebungen entlang eines Lager-Umfanges erreicht werden.

Auch das Drehfräsen, insbesondere wenn es mit hohen Schnittgeschwindigkeiten betrieben wird, ergibt eher kurzwellige Schwingungen und damit kurzwellige Rundheitsabweichungen. Denn beim Drehfräsen wird mit einer Art Fingerfräser, welcher parallel versetzt zur Radialrichtung der zu bearbeitenden Mantelfläche der Lagerstelle angeordnet ist, gefräst, indem die Mantelfläche mittels der einen oder wenigen Schneiden, die auf der Stimseite des Fingerfräsers angeordnet sind, bearbeitet wird. Dabei hat sich insbesondere die Bearbeitung mit nur einer einzigen Schneide als vorteilhaft herausgestellt, wenn dabei mit sehr hohen Drehzahlen des Fräsers gearbeitet wird und das Werkstück sich vergleichsweise langsam dreht. Wenn dabei auch die Spiegelflächen einer Lagerstelle mitbearbeitet werden sollen, ist der Fingerfräser auch auf seiner Mantelfläche mit einer oder mehreren Schneiden ausgestattet.

Ferner muß berücksichtigt werden, daß beim Finishen in der Regel während des Prozesses das am Werkstück anliegende Schleifmittel, z.B. ein Finishband, nicht gewechselt wird. Das Schleifmittel setzt sich also während des Finishvorganges mehr und mehr an seiner Oberfläche zu, und der Materialabtrag pro Zeiteinheit nimmt stetig ab.

Wie schnell sich vor allem am Beginn des Finishens das Schleifmittel zuzusetzen beginnt, hängt nicht nur von der anfangs vorhandenen Rauheit der Oberfläche, sondern auch von deren Traganteil ab:

Je geringer der Traganteil bei einer bestimmten Rauheit - zu Beginn des Finishens - ist, also je spitzer und mit um so steileren Flanken die mikroskopische Oberflächenstruktur sich darstellt, um so eher wird eine solche Oberflächenstruktur aus dem Finishband oder auch dem Finishstein oder vergleichbaren Finishmitteln zu Beginn die abgetragenen und im Finishband abgelagerten Materialpartikel noch entfernen können. Mit zunehmender Egalisierung der mikroskopischen Oberfläche setzt sich auch die Oberfläche des Schleifmittels beim Finishen immer schneller zu.

Dies bedeutet, daß - bei gleicher Rauheit - ein zu Beginn des Finishens geringer Traganteil für einen hohen anfänglichen Materialabtrag und damit ein zeitlich kurzes Finishen vorteilhaft ist.

Dies bedeutet ferner, daß durch Finishen größere Rauheiten bewältigt werden können, je geringer der Traganteil bei diesen größeren Rauheiten ist.

Mit dem bisherigen Schleifen - welches immer im Anschluß an das Härten durchgeführt wurde - wurde zwar die Rauheit der Oberfläche gegenüber der spanenden Vorbearbeitung reduziert, der Traganteil dabei im gleichen Zug jedoch entweder konstant gehalten oder sogar erhöht, da die spanende Vorbearbeitung eine mikroskopische Oberflächenstruktur hinterläßt, die einen geringen Traganteil aufweist, da durch die Bearbeitung mit der bestimmten Schneide in oberflächennahen Bereichen teilweise die Korngrenzen in der Metallstruktur radial von außen nach innen verlaufend aufgerissen werden.

Damit ist es möglich, auf ökonomische Art direkt nach dem spanenden Bearbeiten zu finishen, sofern ein effizienter Materialabtrag beim Finishen durch die Vorbearbeitung dadurch begünstigt wird, daß einerseits durch die Wahl des richtigen spanenden Bearbeitungsverfahrens die dort erzielte Rauheit einen geringen Traganteil aufweist, und die dort erzielte Rundheitsabweichung eine möglichst kurzwellige Rundheitsabweichung ist.

Dabei muß weiterhin berücksichtigt werden, daß bei dem bisherigen Schleifen von Lagerstellen die aus der spanenden Vorbearbeitung resultierenden Rundheitsabweichungen durch das Schleifen in der Regel nur in ihrem Absolutwert reduziert wurden, jedoch nicht in ihrer Charakteristik. Es wurden also aus langwelligen Rundheitsabweichung keine kurzwelligen Rundheitsabweichungen durch das Schleifen, sondern es wurde die Anzahl der Wellentäler entweder beibehalten oder gar reduziert, mit der Folge, daß die weitere Verbesserung der Rundheitsabweichungen durch das Finishen, betrachtet in Ergebnisverbesserung pro Zeiteinheit, beim Finishen eher erschwert wurde.

Daraus ergibt sich, daß ein Finishen direkt nach dem spanenden Bearbeiten dann besonders wirtschaftlich ist, wenn nach dem spanenden Bearbeiten die Rundheitsabweichungen geringer als 60 µm, insbesondere geringer als 40 µm sind, die Durchmesserabweichung geringer als 200 µm, insbesondere geringer als 150 um und die Rauheit geringer als 10 µm, insbesondere geringer als 6 µm. Dabei sind Rundheitsabweichungen mit einer Kurzwelligkeit von mindestens 5 Wellen pro Umfang anzustreben, was für Lagerdurchmesser von ca. 50 mm gilt, sich jedoch bei steigenden oder sinkenden Lagerdurchmessern nur unterproportional ändern sollte, also z.B. 100% Umfangsänderung bewirkt nur maximal 30% Veränderung der Anzahl der Wellen.

Femer ist dabei ein eher geringerer Traganteil der nach dem Spanen erzielten Rauheit anzustreben, als er nach dem Schleifen erhalten wird.

Bei Hublagern sollte zusätzlich die Winkelabweichung nach der spanenden Bearbeitung kleiner als 0,4°, insbesondere kleiner als 0,2°, betragen und die Hubabweichung weniger als 0,40%, insbesondere weniger als 0,20%, was den einzuhaltenden Toleranzen der einsatzfähigen Kurbelwelle entspricht, da diese Parameter durch das Finishen nicht mehr wirtschaftlich vertretbar verändert werden können.

Für die spanende Bearbeitung bietet sich damit das Außenfräsen oder das Drehfräsen, insbesondere in Form von Hochgeschwindigkeitsfräsen, aufgrund der vorbeschriebenen Zusammenhänge an.

Insbesondere bei schwierigen Werkstücken kann es sich erweisen, daß sich eine für die direkte Kopplung von spanender Bearbeitung und Finishen günstige Konstellation der nach der spanenden Bearbeitung und vor dem Finishen vorhandenen Abweichungen zwischen Sollwerten und Istwerten der relevanten Parameter nur noch erzielen lassen kann, wenn die spanende Bearbeitung mehrstufig, insbesondere zweistufig (Vorspanen und Fertigspanen) erfolgt. Dabei ist das Hochgeschwindigkeits-Außenfräsen oder das Hochgeschwindigkeits-Drehfräsen sowohl bei Hublagern als auch bei Mittellagern für die zweite Stufe, das Fertigspanen, zu bevorzugen.

Die erste Stufe, das Vorspanen, wird bei Hublagem ebenfalls mit Außenfräsen, insbesondere mit Hochgeschwindigkeits-Außenfräsen erfolgen, bei Mittellagern kann dies auch durch Drehen oder Drehräumen oder Dreh-Drehräumen erfolgen.

Wenn zwei- oder gar mehrstufig zerspant wird, bewegen sich die beim Fertigspanen zu bewältigenden Aufmaße dabei zwischen 0,1 und 0,4 mm, um durch Abnahme sehr dünner Späne vor allem die Rundheit und Durchmesserabweichung weiter zu verbessern und eine im Verlaufe jedes einzelnen Schnittes des Hochgeschwindigkeitsfräsens möglichst gleich bleibende Rauheit mit gleichbleibend geringem Traganteil in mikroskopischer Hinsicht zu erzielen.

Ob das Härten erst nach dem Beenden der - ein- oder zweistufigen - spanenden Bearbeitung durchgeführt wird, und nach dem Härten nur noch mittels Finishen eine Materialabnahme erfolgen kann, hängt primär vom Maß des Verzuges ab, der beim Härten auftritt. Der Verzug hängt von einer Reihe von Einzelfaktoren ab wie Gestalt und Dimensionierung der Kurbelwelle, der Art des Härteverfahrens, ob kleinere oder größere Flächenbereiche oder gar die gesamte Oberfläche gehärtet wird, von der Eindringtiefe des Härteprozesses und der zeitlichen Gestaltung des Härteprozesses etc.

Dabei darf der voraussichtliche maximale Verzug, der beim Härten auftritt, zusammen mit den nach dem letzten vor dem Härten erfolgenden spanenden Bearbeitungsschritt nicht die Schwelle übersteigen, die mit wirtschaftlich vertretbarem Aufwand durch Finishen bewältigt werden kann.

Andernfalls wird nach dem Härten nochmals eine Materialabnahme durch spanende Bearbeitung, insbesondere der zweite spanende Bearbeitungsschritt (Fertigspanen) eines zweistufigen Zerspanens, durchgeführt.

Da nach dem Härten der Materialabtrag bei der spanenden Bearbeitung schwieriger ist als beim Arbeiten am ungehärteten Werkstück, wird dabei das durch das Fertigspanen im gehärteten Zustand zu bewältigende Aufmaß gering gehalten.

Beim Finishen empfiehlt sich der Einsatz von Bandfinishern, wobei die Schleifbänder mittels Anpreßschalen gegen die rotierende Lagerstelle gedrückt werden und gleichzeitig in Längsrichtung eine relative Oszillation zwischen Schleifband und Werkstück bewirkt wird. Die Anpreßschalen sollen dabei das Werkstück um jeweils wenigstens 120°, vorzugsweise um bis zu 180°, umschließen.

Wenn zusätzlich während des Finishprozesses das momentane Istmaß überprüft und der Prozeß hinsichtlich Drehzahl und Anpreßdruck gesteuert wird, kann die Durchmesserabweichung besonders gut reduziert werden, ohne daß in das Werkstück durch hohe Reibungskräfte zuviel Wärme eingebracht und damit ein Verzug des Werkstückes bewirkt wird. Ein geeignetes Finishverfahren ist beispielsweise in der US-PS 4,682,444 beschrieben. Das Finishen erfolgt idealerweise trocken, also ohne Zugabe von Kühl-/Schmiermitteln an die Bearbeitungsstelle, was sich jedoch nicht immer realisieren läßt.

### c) Ausführungsbeispiele

Die vorangehend erwähnten Parameter sind im folgenden anhand der Figuren näher erläutert. Es zeigen:
- Fig. 1:: einen Querschnitt durch einen Hublagerzapfen,
- Fig. 2:: einen Querschnitt durch einen Lagerzapfen allgemein, und

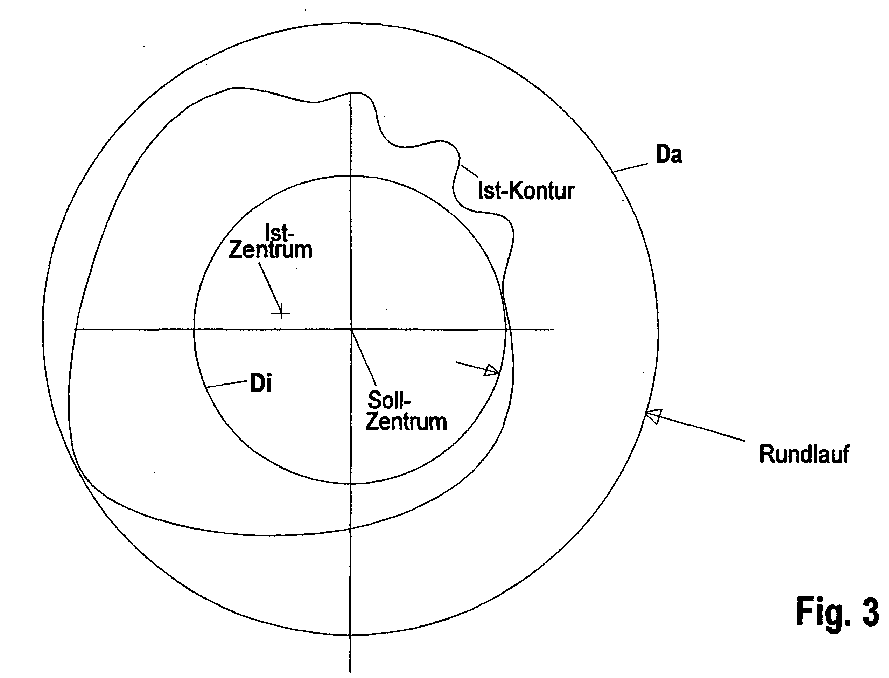

- Fig. 3:: eine Kontur im Querschnitt, deren Rundlauf bestimmt werden soll.

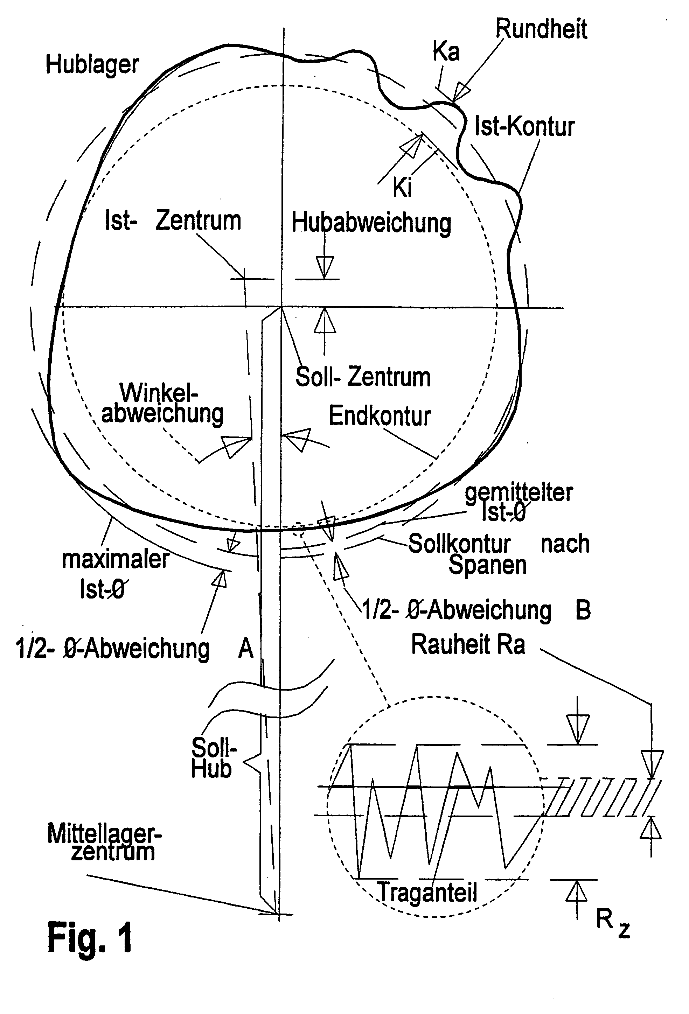

Die Figur 1 zeigt im Querschnitt einen Hublagerzapfen z. B. nach dem Spanen und vor dem Finishen, wobei mit durchgezogener, dicker Linie dessen Istkontur, mit gestrichelter Linie dessen Sollkontur nach dem Spanen und mit gepunkteter bzw. kurz gestrichelter Linie dessen Sollkontur nach dem Finishen, also dessen Endkontur, eingezeichnet ist.

Dabei sind die Sollkonturen exakt kreisrunde Konturen um ein Sollzentrum, welches einen bestimmten Sollhub, also Radialabstand vom Mittellagerzentrum der Kurbelwelle, aufweist.

Die Istkontur des Hublagerzapfens ist demgegenüber unrund. Die Unrundheiten sind in der Figur drastisch übertrieben dargestellt.

Im rechten oberen Quadranten ist dabei eine kurzwellige Rundheitsabweichung mit vielen Wellenbergen und Wellentälern pro Winkelsegment dargestellt, während über den Rest des Umfanges eine langwellige Rundheitsabweichung mit wenigen Wellen und Wellentälern dargestellt ist.

Bei den einzelnen Parametern, die zur Beurteilung der Qualität einer rotationssymmetrischen Fläche und insbesondere der Lagerstellen von Kurbelwellen herangezogen werden, ist zu unterscheiden zwischen Parametern, die auf das Sollzentrum des jeweiligen Lagerzapfens bezogen sind und Parametern, die unabhängig vom Sollzentrum bestimmt werden.

Makroskopische Parameter, die nicht auf ein bestimmtes Sollzentrum bezogen sind, sind die Rundheit und die Durchmesserabweichung.

### Zu den Parametern im einzelnen:

### Rundheit:

Die sogenannte Rundheit, also eigentlich die Abweichung von der idealen kreisrunden Sollkontur, wird nach dem ISO1101, dort Punkt 3.8, dadurch bestimmt, daß die Istkontur zwischen zwei zueinander konzentrische Kreise, dem inneren Kreis Ki und dem äußeren Kreis Ka, so eng wie möglich eingepaßt wird. Die beiden Kreise müssen lediglich zueinander, nicht jedoch zum Sollzentrum konzentrisch sein. Der radiale Abstand, also die halbe Durchmesserdifferenz, dieser beiden Kreise Ki und Ka, wird als Rundheit bezeichnet.

Da die Kreise Ki und Ka konzentrisch zueinander verlaufen müssen, stimmt deren Mittelpunkt, das Rundheitszentrum, nicht immer mit dem Istzentrum, welches beispielsweise als Schwerpunkt der als Fläche betrachteten Istkontur ermittelt wird, überein.

Die Rundheit ist damit quasi der Höhenabstand zwischen dem höchsten Wellenberg und dem tiefsten Wellental der abgewickelten Istkontur.

### Durchmesserabweichung:

Hier ist zunächst von Bedeutung, ob als Solldurchmesser der Solldurchmesser nach dem jeweiligen Bearbeitungsschritt oder der Enddurchmesser, also der Solldurchmesser nach dem Finishen, gewählt wird. In der Regel beziehen sich die in dem Forderungskatalog für ein Bearbeitungsverfahren oder eine Bearbeitungsmaschine enthaltenen Maximalgrenzen für die Durchmesserabweichung auf den Sollwert nach diesem speziellen Bearbeitungsschritt.

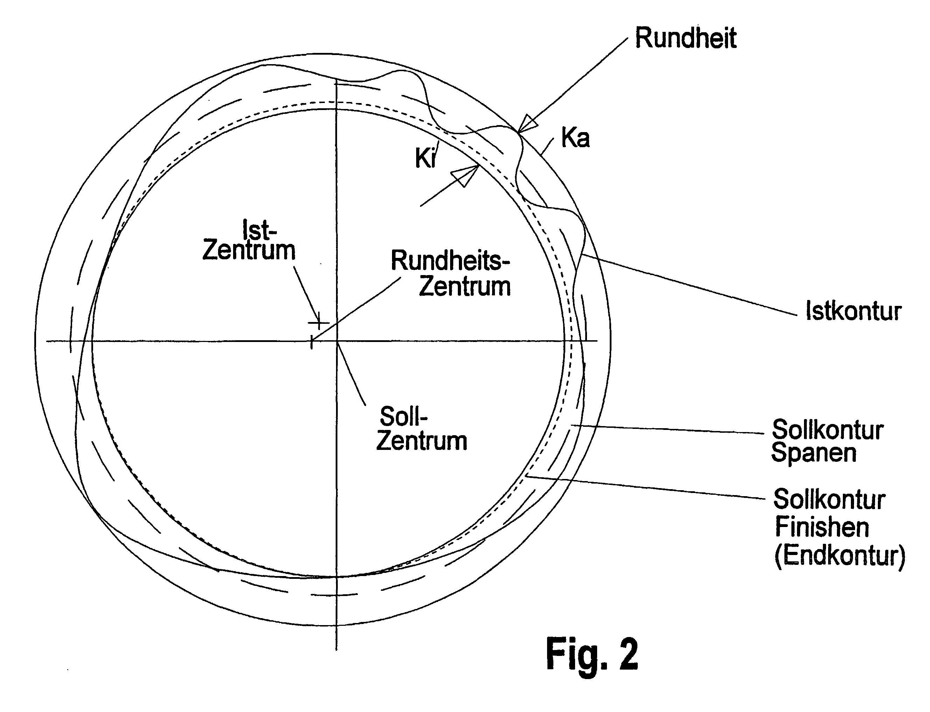

In Fig. 2 ist sowohl die Sollkontur nach dem Spanen als auch die Sollkontur nach dem Finishen, also die Endkontur, zusätzlich zur Istkontur eingezeichnet.

Die Durchmesserabweichung kann auf mindestens zwei grundsätzlich verschiedene Arten ermittelt werden:

Die früher übliche Kontrolle des Durchmesser bestand darin, daß die bearbeitete Kontur entweder axial in hülsenförmige Lehren mit bekanntem Innendurchmesser oder radial in gabelförmige Lehren, bei denen der freie Abstand zwischen den Enden der Gabel bekannt war, eingeführt wurde. Derartige Lehren waren in kleinen Maßabstufungen verfügbar, und wenn das Prüfteil sich in die eine Lehre gerade noch einführen ließ, in die nächstkleinere Lehre jedoch bereits nicht mehr, so war damit das Durchmessermaß des Prüfteiles als zwischen den Maßen der beiden Lehrengrößen liegend bekannt.

Die Meßmethode mit einer hülsenförmigen Lehre und - bei mehrfacher Durchführung in unterschiedlichen Querebenen - auch die Methode mit einer gabelförmigen Lehre bestimmte also immer den maximalen Istdurchmesser.

Heute werden bei hohen Qualitätsanforderungen Prüfteile in der Regel mit sogenannten Meßmaschinen vermessen und die gewünschten Werte von der Meßmaschine bestimmt. Im Falle der Durchmesserabweichung vermißt die Meßmaschine mit ihrem Taster die Umfangskontur des gewünschten Lagerzapfens in einer bestimmten oder auch in mehreren Ebenen. Da hieraus sämtliche Einzeldurchmesser, in jeder gewünschten Winkellage, bekannt sind, kann hieraus beispielsweise ein durchschnittlicher, gemittelter Istdurchmesser errechnet werden.

Die Durchmesserabweichung A besteht in der Differenz des maximalen Istdurchmessers und dem Solldurchmesser, wie in Fig. 1 eingezeichnet. Die Rundheit bzw. die Abweichung von der idealen Rundheit liegt damit vollständig radial innerhalb des maximalen Istdurchmessers.

Bestimmt man die Durchmesserabweichung aus dem gemittelten Istdurchmesser und dem Solldurchmesser, ergeben sich geringere Werte für die Durchmesserabweichung, da die Rundheit teilweise innerhalb, teilweise außerhalb des gemittelten Istdurchmessers liegt.

In beiden Fällen ist jedoch darauf zu achten, daß zwar nicht unbedingt die Sollkontur nach dem momentan betrachteten Bearbeitungsschild, etwa dem Spanen, wie in Fig. 2 eingezeichnet, wohl aber die Endkontur vollständig innerhalb der Istkontur liegen muß.

Die Endkontur kann dagegen durchaus wenigstens teilweise außerhalb des inneren Kreises Ki, welcher zur Bestimmung der Rundheit herangezogen wird, liegen.

Bei Bestimmung der Durchmesserabweichung B aus dem gemittelten Istdurchmesser und dem Solldurchmesser muß für die Maßhaltigkeit des Prüfstückes zusätzlich berücksichtigt werden, um welchen Anteil sich die Rundheit von diesem gemittelten Istdurchmesser radial nach innen erstreckt. Ferner muß bekannt sein, ob der gemittelte Istdurchmesser positiv oder negativ vom Solldurchmesser nach dem jeweiligen Bearbeitungsschritt, also beispielsweise nach dem Spanen, abweicht, da der gemittelte Istdurchmesser - wie in Fig. 1 dargestellt - durchaus auch kleiner als die Sollkontur nach dem Spanen sein kann, ohne daß das Prüfteil als Ausschuß zu betrachten ist. Solange der gemittelte Istdurchmesser noch größer ist als die Endkontur, kann durch den nachfolgenden Bearbeitungsschritt, beispielsweise das Finishen, die Endkontur erreicht werden.

In Fig. 1 sind wegen der besseren Übersichtlichkeit in Fig. 1 die Kreise Ki und Ka zur Bestimmung der Rundheit sowie der gemittelte Istdurchmesser und der maximale Istdurchmesser nur als Teilstücke eingezeichnet.

Ein makroskopischer Parameter, der sowohl für Hublagerzapfen als auch für Hauptlagerzapfen von Bedeutung ist und dennoch auf die Relation zum Sollzentrum aufbaut, ist der

### - Rundlauf:

Dieser wird bestimmt durch Anlegen minimal beabstandeter Kreise Di bzw. Da innen und außen an die Istkontur des Prüfstückes. Gegenüber der Rundheitsbestimmung sind diese beiden Kreise Di und Da jedoch nicht nur zueinander, sondern auch zum Sollzentrum konzentrisch.

Der Ringbereich zwischen den Kreisen Di und Da stellt also denjenigen Ringbereich dar, den die Istkontur der z. B. Hauptlagerfläche bei Rotation der Kurbelwelle bestreichen würde.

Vor allem für die dargestellten Hublagerzapfen, wie in Fig. 1 dargestellt, ist die Abweichung des Istzentrums vom Sollzentrum von entscheidender Bedeutung, die durch das Finishen nicht mehr oder nur gering beeinflußt wird.

Während die Hubabweichung, also die Abweichung des Isthubes vom Sollhub, die Sollverdichtung der Hubkolbenmaschine, in die die Kurbelwelle später eingesetzt wird, unerwünscht verändert, beeinflußt die Winkelabweichung, also die Abweichung der Istwinkellage eines Hublagerzapfens bezüglich der Gesamtkurbelwelle von ihrer Sollwinkellage, die Winkellage des Totpunkts dieser Hublagerstelle bei der Hubkolbenmaschine, bei einem Verbrennungsmotor also u. a. den Zündzeitpunkt, die optimalen Öffnungs- und Schließzeitpunkte für die Ventile etc..

### Hubabweichung und Winkelabweichung

müssen also nach dem Spannen bereits innerhalb der Toleranzen für die Endmasse liegen.

Gegenüber den bisherigen makroskopischen Betrachtungen ist in dem rechten unteren Bildteil der Figur in der Vergrößerung die mikroskopische Oberflächenstruktur dargestellt.

### Rauhigkeit:

Wird die subjektiv empfundene, mikroskopische Oberflächengestaltung bezeichnet. Die

### Rauheit Rₐ

bezeichnet dabei den nach DIN 4768 bestimmten arithmetischen Mittelwert der absoluten Werte aller Profilordinaten des mikroskopischen Oberflächenprofils, üblicherweise ermittelt innerhalb einer Gesamtmeßstrecke und nach dem Ausfiltern von groben Formabweichungen und gröberen Anteilen wie Rundheit, also Welligkeit der Oberfläche.

Dennoch läßt dieser häufig verwendete Parameter kaum einen Rückschluß auf die Höhe des Rauheitsprofils zu. Deshalb wird häufig zur besseren Veranschaulichung die

### Rauhtiefe R_{z}

mit angegeben (ebenfalls gemäß DIN 4768). Diese stellt den Abstand zwischen der höchsten Erhebung und tiefsten Vertiefung einer mikroskopischen Oberflächenstruktur innerhalb einer definierten Prüfstrecke dar, wobei der so ermittelte Wert von fünf Prüfstrecken zur Bestimmung von R_{z} gemittelt wird, um Ausreißer aus dem Oberflächenprofil, also extrem hohe Spitzen und extrem tiefe Täler, rechnerisch nicht überzubewerten.

### Traganteil

ist - in der Abwicklung betrachtet - derjenige Oberflächenanteil, der sich beim Einebnen der mikroskopischen Rauheit auf eine bestimmte Resthöhe als durchgehender Oberflächenanteil ergibt.

In der Praxis wird der Traganteil ermittelt, indem auf die zu bestimmende Oberfläche eine Gegenfläche mit Idealform, also bei ebenen Flächen eine ideal ebene Fläche oder im vorliegenden Fall bei Außenrundflächen eine ideal einem Kreisbogen entsprechende konvexe Gegenfläche - mit einer bestimmten Nennbelastung, beispielsweise 0,1 N/mm², aufgedrückt wird. Durch diese Nennbelastung werden die mikroskopischen Erhebungen des Profils, die ohne Belastung nur mit ihren Spitzen und damit mit einem Flächenanteil nahe gegen 0 an der Gegenfläche anliegen würden, etwas flachgedrückt, so daß der kontaktierende Flächenanteil gegenüber der Gesamtfläche steigt und durch Einfärben etc. in der Praxis gut ermittelt werden kann.

Auch hierbei wird bei der Bestimmung von einer bestimmten Bezugsfläche ausgegangen. Eine Normung nach DIN für die Bestimmung des Traganteils existiert jedoch nicht, sondern lediglich eine diesbezügliche VDI-Richtlinie, nämlich VDINDE 2603.

Der Traganteil korreliert also mit demjenigen Oberflächenanteil, der beim späteren Einsatz des Lagerzapfens sich tatsächlich an der außen gegenüberliegenden Lagerschale abstützen kann, wenngleich bei dem Praxiseinsatz zusätzlich dynamischen, die radial wirkenden Kräfte in dieser Lagerpaarung zusätzlich wirken, und damit die tragende Fläche gegenüber dem einer definierten statischen Belastung ermittelten Traganteil noch erhöhen.

Die zwischen diesem durchgehenden Oberflächenanteil verbleibenden restlichen mikroskopischen Vertiefungen dienen beispielsweise der Aufriahme von Schmiermittel, der Aufnahme von mikroskopischem Abrieb bzw. molekularer Fließbewegungen des Werkstoffes etc., weshalb bei mechanischen Lagerstellen wie den Lagerstellen einer Kurbelwelle kein Traganteil von 100%, sondern von maximal etwa 95% erwünscht ist.

## Patentansprüche

1. Verfahren zur verwendungsfähigen Fertigbearbeltung von Kurbelwellen, welche wenigstens teilweise einem Härtungsprozeß unterworfen werden, insbesondere der Lagerstellen von Kurbelwellen, insbesondere Pkw-Kurbelwellen, wobei nach dem Urformen ein Materialabtrag höchstens durch spanende Bearbeitung mit bestimmter Schnelde erfolgt,
**dadurch gekennzeichnet, daß**
die spanende Bearbeitung beendet wird, wenn
a) die Rundheitsabweichung kleiner als 60 µm, insbesondere kieiner als 40 µm, insbesondere kleiner als 10 µm ist,
b) die Durchmesserabweichung kleiner als 200 µm, insbesondere kleiner als 150 µm, insbesondere kleiner als 150 µm - als positive Abweichung bezogen auf die Sollkontur nach dem Finishen - ist, und/oder
c) die Rauheit (Ra) weniger als 10 µm, insbesondere weniger als 6 µm, insbesondere weniger als 2 µm beträgt.

2. Verfahren zur verwendungsfähigen Fertigbearbeitung von Kurbelwellen, welche wenigstens teilweise einem Härtungsprozeß unterworfen werden, insbesondere der Lagerstellen von Kurbelwellen, insbesondere Pkw-Kurbelwellen, wobei nach dem Urformen ein Materialabtrag höchstens durch spanende Bearbeitung mit bestimmter Schneide und anschließendes Finishen erfolgt,
**dadurch gekennzeichnet, daß**
die spanende Bearbeitung beendet wird, wenn
a) die Rundheitsabweichung kleiner als 60 µm, insbesondere kleiner ais 40 µm, insbesondere kieiner als 10 µm ist,
b) die Durchmesserabweichung kleiner als 200 µm, insbesondere kleiner als 150 µm, insbesondere kleiner als 150 µm - als positive Abweichung bezogen auf die Sollkontur nach dem Finishen - ist, und/oder
c) die Rauheit (Ra) weniger als 10 µm, insbesondere weniger als 6 µm, insbesondere weniger als 2 µm beträgt.

3. Verfahren nach einem der vorhergehenden Ansprüche,
**dadurch gekennzeichnet, daß**
zwischen der spanenden Bearbeitung und dem Finishen das Härten der Mantelflächen und/oder Spiegelflächen der Lagerflächen erfolgt.

4. Verfahren nach einem der vorhergehenden Ansprüche,
**dadurch gekennzeichnet, daß**
die spanende Bearbeitung mehrstufig, insbesondere zweistufig durch Vorspanen und Fertigspanen, erfolgt, wobei insbesondere das Fertigspanen nach dem Härten erfolgt.

5. Verfahren nach einem der vorhergehenden Ansprüche,
**dadurch gekennzeichnet, daß**
die Kurbelwelle aus Stahl besteht.

6. Verfahren nach einem der vorhergehenden Ansprüche,
**dadurch gekennzeichnet, daß**
die Rundheitsabweichung im Maß der Durchmesserabwelchung bereits enthalten ist.

7. Verfahren nach einem der vorhergehenden Ansprüche,
**dadurch gekennzeichnet, daß**
bei der Übergabe von der spanenden Bearbeitung an das Finishen die Rundheitsabweichung der Lagerstelle kurzwellig mit mindestans 5, insbesondere mindestens 20, insbesondere mindestens 30 Wellentälem pro Umfang ist.

8. Verfahren nach einem der vorhergehenden Ansprüche,
**dadurch gekennzeichnet, daß**
bei der Übergabe von der spanenden Bearbeitung an das Finishen der Traganteil beim Aufdrücken einer ideal geformten Gegenfläche mit 0,10 N/mm² zwischen 20 % und 40 %, insbesondere zwischen 25% und 35%, liegt.

9. Verfahren nach einem der vorhergehenden Ansprüche,
**dadurch gekennzeichnet, daß**
bei der Übergabe von der spanenden Bearbeitung an das Finishen der Tragantell 20 - 40 %, insbesondere 30 - 35 % des nach dem Finishen angestrebten bzw. erreichten Traganteiles beträgt.

10. Verfahren nach einem der vorhergehenden Ansprüche,
**dadurch gekennzeichnet, daß**
bei der Übergabe von der spanenden Bearbeitung an das Finishen der Traganteil bei weniger als 50 %, insbesondere weniger als 25 % des Traganteiles, wie er sich nach dem Finishen ergibt, liegt.

11. Verfahren nach einem der vorhergehenden Ansprüche,
**dadurch gekennzeichnet**, d a ß
für Hublagerstellen bei der Übergabe von der spanenden Bearbeitung an das Finishen
- die Winkelabweichung kleiner als 0,4°, insbesondere kleiner als 0,2°, vorzugsweise kleiner als 0,1° beträgt, und/oder
- die Hubabweichung weniger als 0,40%, insbesondere weniger als 0,20%, insbesondere weniger als 0,10% des Sollhubes beträgt.

12. Verfahren nach einem der vorhergehenden Ansprüche,
**dadurch gekennzeichnet, daß**
die spanende Bearbeitung In möglichst wenigen Bearbeitungsstufen, insbesondere 1-stufig oder 2-stufig (durch Vorspanen und Fertigspanen), durchgeführt wird.

13. , Verfahren nach Anspruch 12,
**dadurch gekennzeichnet, daß**
das Fertigspanen durch Außenfräsen oder Drehfräsen, insbesondere in Form von Hochgeschwindigkeitsfräsen, erfolgt.

14. Verfahren nach Anspruch 13 oder 12,
**dadurch gekennzeichnst, daß**
das Vorspanen bei Mittellagern mittels Drehräumen und/oder Dreh-Drehräumen durchgeführt wird.

15. Verfahren nach Anspruch 12,13 oder 14,
**dadurch gekennzeichnet, daß**
bei Hublagem das Vorspanen mittels Außenfräsen oder Drehträsen, insbesondere in Form von Hochgeschwindigkeitsfräsen durchgeführt wird.

16. Verfahren nach einem der vorhergehenden Ansprüche,
**dadurch gekennzeichnet, daß**
das Finishen mittels eines stillstehenden, gegen die rotierende und relativ zur Lagerfläche oszillierende Lagerfläche, Insbesondere trocken angelegten, Schleifmittels geschieht.

17. Verfahren nach Anspruch 16,
**dadurch gekennzeichnet, daß**
beim Finishen ein Finishband mittels die Lagerstelle über wenigstens 120° umschließender Anpreßschalen mit definierter Kraft gegen die Lagerstelle gedrückt wird.

## Claims

1. A method of finishing machining, ready for use, crankshafts which are at least partially subjected to a hardening process, in particular the bearing locations of crankshafts, in particular automobile crankshafts, wherein after the original shaping operation removal of material is effected at most by cutting machining with a given cutting edge,
**characterized in that** cutting machining is terminated when:
a) the roundness deviation is less than 60 µm, in particular less than 40 µm, in particular less than 10 µm,
b) the diameter deviation is less than 200 µm, in particular less than 150 µm, in particular less than 100 µm, as a positive deviation with respect to the reference contour after the finishing operation, and/or
c) the roughness (Ra) is less than 10 µm, in particular less than 6 µm, in particular less than 2 µm.

2. A method of finishing machining, ready for use, crankshafts which are at least partially subjected to a hardening process, in particular the bearing locations of crankshafts, in particular automobile crankshafts, wherein after the original shaping operation removal of material is effected at most by cutting machining with a given cutting edge and subsequent finishing
**characterized i**n that cutting machining is terminated when:
a) the roundness deviation is less than 60 µm, in particular less than 40 µm, in particular less than 10 µm,
b) the diameter deviation is less than 200 µm, in particular less than 150 µm, in particular less than 100 µm, as a positive deviation with respect to the reference contour after the finishing operation, and/or
c) the roughness (Ra) is less than 10 µm, in particular less than 6 µm, in particular less than 2 µm.

3. A method as set forth in one of the preceding claims,
**characterised in that** hardening of the peripheral surfaces and/or thrust surfaces is effected between the cutting machining operation and the finishing operation.

4. A method as set forth in one of the preceding claims
**characterised in that** the cutting machining operation is effected in a multi-stage procedure, in particular a two-stage procedure, by preliminary cutting and finishing cutting, wherein in particular the finishing cutting operation is effected after the hardening operation.

5. A method as set forth in one of the preceding claims
**characterised in that** the crankshaft comprises steel.

6. A method as set forth in one of the preceding claims
**characterised in that** the roundness deviation is already contained in the dimension of the diameter deviation.

7. A method as set forth in one of the preceding claims
**characterised in that** at the transfer from the cutting machining operation to the finishing operation the roundness deviation of the bearing location is short-waved with at least 5, in particular at least 20 and in particular at least 30 wave troughs per circumference.

8. A method as set forth in one of the preceding claims
**characterised in that** at the transfer from the cutting machining operation to the finishing machining operation the percentage contact area when pressed against an ideally shaped counterpart surface with a pressure of 0.10 N/mm² is between 20% and 40% and in particular between 25% and 35%.

9. A method as set forth in one of the preceding claims
**characterised in that** at the transfer from the cutting machining operation to the finishing operation the percentage contact area is 20-40%, in particular 30-35% of the percentage contact area which is aimed at or attained after the finishing operation.

10. A method as set forth in one of the preceding claims
**characterised in that** at the transfer from the cutting machining operation to the finishing operation the percentage contact area is less than 50%, in particular less than 25% of the percentage contact area as occurs after the finishing operation.

11. A method as set forth in one of the preceding claims
**characterised in that** for big-end bearing locations at the transfer from the cutting machining operation to the finishing operation:
- the angle deviation is less than 0.4°, in particular less than 0.2°, preferably less than 0.1°, and/or
- the stroke deviation is less than 0.40%, in particular less than 0.20%, in particular less than 0.10% of the reference stroke.

12. A method as set forth in one of the preceding claims
**characterised in that** the cutting machining operation is effected in as few machining steps as possible, in particular as a one-step procedure or a two-step procedure (by preliminary cutting and finishing cutting).

13. A method as set forth in claim 12
**characterised in that** the finishing cutting operation is effected by external milling or rotary milling, in particular in the form of high-speed milling.

14. A method as set forth in claim 13 or claim 12
**characterised in that** the preliminary cutting operation is effected in the case of main bearings by means of rotary broaching and/or turning-rotary broaching.

15. A method as set forth in claim 12, claim 13 or claim 14
**characterised in that** when dealing with big-end bearings the preliminary cutting operation is effected by means of external milling or rotary milling, in particular in the form of high-speed milling.

16. A method as set forth in one of the preceding claims
**characterised in that** the finishing operation is effected by means of a stationary grinding means which is applied in particular dry against the bearing surface which rotates and oscillates relative to the bearing surface.

17. A method as set forth in claim 16
**characterised in that** in the finishing operation a finishing belt is pressed against the bearing location with a defined force by means of contact pressure shell members which embrace the bearing location over at least 120°.

## Revendications

1. Procédé pour le finissage apte à l'utilisation de vilebrequins qui sont soumis au moins partiellement à une procédure de trempe, en particulier des paliers de vilebrequins, en particulier de vilebrequins de voitures particulières, après la transformation un enlèvement de matière s'effectuant principalement par enlèvement de copeaux avec une certaine lame,
**caractérisé en ce que**
l'usinage par enlèvement de copeaux est terminé quand
a) la divergence de rotondité est inférieure à 60 µm, en particulier inférieure à 40 µm en particulier inférieure à 10 µm,
b) la divergence de diamètre est inférieure à 200 µm, en particulier inférieure à 150 µm, en particulier inférieure à 150 µm - en tant que divergence positive en référence au contour de consigne après le finissage, et/ou
c) la rugosité (Ra) est inférieure à 10 µm, en particulier inférieure à 6 µm, en particulier inférieure à 2 µm.

2. Procédé pour le finissage apte à l'utilisation de vilebrequins qui sont soumis au moins partiellement à une procédure de trempe, en particulier des paliers de vilebrequins, en particulier de vilebrequins de voitures particulières, après la transformation un enlèvement de matière s'effectuant principalement par enlèvement de copeaux avec une certaine lame et un finissage consécutif,
**caractérisé en ce que**
l'usinage par enlèvement de copeaux est terminé quand
a) la divergence de rotondité est inférieure à 60 µm, en particulier inférieure à 40 µm en particulier inférieure à 10 µm,
b) la divergence de diamètre est inférieure à 200 µm, en particulier inférieure à 150 µm, en particulier inférieure à 150 µm - en tant que divergence positive en référence au contour de consigne après le finissage, et/ou
c) la rugosité (Ra) est inférieure à 10 µm, en particulier inférieure à 6 µm, en particulier inférieure à 2 µm.

3. Procédé selon l'une des revendications précédentes,
**caractérisé en ce que** la trempe des surfaces d'enveloppe et/ou des surfaces symétriques des surfaces de palier s'effectue entre l'usinage par enlèvement de copeaux et le finissage.

4. Procédé selon l'une des revendications précédentes,
**caractérisé en ce que** l'usinage par enlèvement de copeaux s'effectue sur plusieurs étages en particulier sur deux étages par dégrossissage et finissage par enlèvement de copeaux, en particulier, le finissage par enlèvement de copeaux s'effectuant après la trempe.

5. Procédé selon l'une des revendications précédentes,
**caractérisé en ce que** le vilebrequin est en acier.

6. Procédé selon l'une des revendications précédentes,
**caractérisé en ce que** la divergence de rotondité est déjà contenue dans l'étendue de la divergence de diamètre.

7. Procédé selon l'une des revendications précédentes,
**caractérisé en ce que** lors de la transition entre l'usinage par enlèvement de copeaux et le finissage, la divergence de rotondité du palier présentent des ondulations courtes avec au moins 5 creux, en particulier au moins 20 creux, en particulier au moins 30 creux par périphérie.

8. Procédé selon l'une des revendications précédentes,
**caractérisé en ce que** lors de la transition entre l'usinage par enlèvement de copeaux et le finissage, la proportion de support lors de la compression d'une surface opposée de forme idéal avec 0,10 N/mm² est comprise entre 20 % et 40 %, en particulier entre 25 % et 35 %.

9. Procédé selon l'une des revendications précédentes,
**caractérisé en ce que** lors de la transition entre l'usinage par enlèvement de copeaux et le finissage, la proportion de support est de 20 - 40 %, en particulier 30 - 35 % de la proportion de support recherchée respectivement obtenue après le finissage.

10. Procédé selon l'une des revendications précédentes,
**caractérisé en ce que** lors de la transition entre l'usinage par enlèvement de copeaux et le finissage, la proportion de support est inférieure à 50 %, en particulier inférieure à 25 % de la proportion de support comme elle résulte après le finissage.

11. Procédé selon l'une des revendications précédentes,
**caractérisé en ce que** lors de la transition entre l'usinage par enlèvement de copeaux et le finissage, dans le cas de palier de levage,
- la divergence angulaire est inférieure à 0,4°, en particulier inférieure à 0,2°, de préférence inférieure à 0,1° et/ou
- la divergence de course s'élève à moins de 0,40 %, en particulier à moins de 0,20 %, en particulier à moins de 0,10 % de la course de consigne.

12. Procédé selon l'une des revendications précédentes,
**caractérisé en ce que** l'usinage par enlèvement de copeaux est exécuté dans le moins d'étages d'usinage possibles, en particulier mono-étagé ou bi-étagé (par dégrossissage et finissage par enlèvement de copeaux).

13. Procédé selon la revendication 12, **caractérisé en ce que** le finissage par enlèvement de copeaux s'effectue par fraises externes ou fraises rotatives, en particulier sous forme de fraises à grande vitesse.

14. Procédé selon la revendication 13 ou 12, **caractérisé en ce que** le dégrossissage par enlèvement de copeaux de paliers médians est exécuté par brochage par tournage et/ou tournage-brochage par tournage.

15. Procédé selon la revendication 12, 13 et 14, **caractérisé en ce que** le dégrossissage par enlèvement de copeaux de paliers médians est exécuté par des fraises externes ou des fraises rotatives, en particulier sous forme de fraises haute vitesse.

16. Procédé selon l'une des revendications précédentes,
**caractérisé en ce que** le finissage s'effectue au moyen d'un abrasif immobile appliqué en particulier à sec contre la surface de palier oscillante et rotative par rapport à la surface de palier.

17. Procédé selon la revendication 16, **caractérisé en ce que** lors du finissage, une bande de finissage est pressée contre le palier avec une force définie au moyen de coques de pression entourant le palier sur au moins 120°.
